# EUROPÄISCHE PATENTSCHRIFT

(11) **EP 1 780 559 B1**
(45) Veröffentlichungstag und Bekanntmachung des Hinweises auf die Patenterteilung: **05.09.2012**
(21) Anmeldenummer: 06022107.4
(22) Anmeldetag: 21.10.2006
(51) Int. Cl.: G01V 8/14

(54) **Optischer Sensor**
Optical sensor
Capteur optique

(30) Priorität: 28.10.2005 DE 102005051651
(43) Veröffentlichungstag der Anmeldung: 02.05.2007
(73) Patentinhaber: Leuze electronic GmbH + Co. KG, 73277 Owen/Teck (DE)
(72) Erfinder: Argast, Martin, 72584 Hülben (DE); Teumer, Wolfgang, 72525 Münsingen (DE)
(74) Vertreter: Ruckh, Rainer Gerhard

(56) Entgegenhaltungen:
- EP-A- 0 021 163
- DE-A1- 3 015 342
- DE-A1- 10 041 182
- DE-A1- 19 504 230
- DE-A1- 19 533 044
- DE-A1- 19 627 083
- DE-C- 765 353

## Beschreibung

Die Erfindung betrifft eine optoelektronische Vorrichtung.

Eine optoelektronische Vorrichtung der in Rede stehenden Art ist aus der DE 101 35 036 A1 bekannt. Die dort beschriebene optoelektronische Vorrichtung bildet eine Rahmenlichtschranke mit einer Laserdiode zur Erzeugung eines Lichtstrahles unter einem periodischen Reflexionswinkel sowie ersten und zweiten sich gegenüberliegenden ebenen Spiegelflächen. Der Scannerspiegel und die ersten und zweiten Spiegelflächen sind so angeordnet, dass ein erzeugter Lichtstrahl durch den Scannerspiegel auf die erste Spiegelfläche, von dieser auf die zweite Spiegelfläche, zwischen den ersten und zweiten Spiegelflächen wiederholt hin und her und anschließend auf den Lichtempfänger reflektiert wird. Weiterhin wird eine Vorrichtung zur Erzeugung eines Lichtbandes beschrieben, mit einer Laserdiode zum Erzeugen eines Lichtstrahles, einem Scannerspiegel zur Reflektion des Lichtstrahles unter einem periodischen Reflexionswinkel und einem Umlenkprisma zur Erzeugung eines im Wesentlichen gleichmäßigen Lichtbandes auf eine CCD-Zeile.

Nachteilig bei dieser optoelektronischen Vorrichtung ist deren hohe Störanfälligkeit. Diese beruht darauf, dass die ebenen Spiegelflächen äußerst exakt parallel zueinander ausgerichtet sein müssen, damit die Lichtstrahlen in gewünschter Weise entlang dieser Spiegelflächen geführt werden können. Bereits kleinste Vertiefungen dieser Spiegelflächen führen jedoch zu einem seitlichen Entweichen der Lichtstrahlen, so dass diese nicht mehr funktionsfähig ist.

Eine Vorrichtung gemäß dem Oberbegriff des Anspruchs 1 ist aus der EP A 0 021 163 bekannt. Diese Vorrichtung bildet eine Einbruchsicherung für Flächen, bei der der Rand der zu schützenden Fläche mit lichtreflektierenden Schichten versehen ist, die das von einer Lichtquelle ausgehende Licht zu einem Empfänger leiten und bei der bei Beeinflussung dieses Lichtes Alarm ausgelöst wird. Um die Sicherung justierunempfindlich zu machen, sind die lichtreflektierenden Schichten aus Elementen gebildet, die einen auftreffenden Lichtstrahl unabhängig von ihrer Winkelstellung in der durch die Schichten aufgespannten Ebene parallel zu seiner Einfallsrichtung reflektieren. Diese Elemente sind als Spiegelleisten ausgebildet, die 90°-Winkelspiegel oder 90°-Orismen als reflektierende Elemente enthalten. Mehrere solcher Spiegel oder Prismen können in einer Spiegelleiste zusammengefasst sein.

Die DE 195 33 044 A1 betrifft eine Doppeldurchlichtschranke. Diese Lichtschranke besteht aus einem Sender-/Empfängerteil und einem Reflektorteil, wobei der Sender und der Empfänger in eine Ebene weisend voneinander beabstandet sind und der Reflektorteil reflektierende Elemente derart aufweist, dass ein vom Sender ausgesendeter Lichtstrahl so gespiegelt wird, dass ein Rückstahl entsteht, der parallel zum ausgesendeten Lichtstrahl verläuft und auf den Empfänger trifft. Der Reflektorteil zur Lichtschranke weist eine Anordnung von reflektierenden Elementen derart auf, dass die Distanz zwischen dem Sender und dem Empfänger überbrückt wird und einen Tripelspiegel bilden, durch welchen der empfangene erste Schrankenstrahl im entsprechenden Abstand als zweiter, parallel verlaufenden Schrankenstrahl reflektiert wird. Wird der eine oder/und der andere Schrankenstrahl unterbrochen gibt die Lichtschranke ein Schaltsignal aus.

Die DE 195 04 230 A1 betrifft eine optoelektronische Vorrichtung mit einem einen Sendelichtstrahl emittierenden Sendeelement und einem vom Sendeelement entfernt angeordneten Empfangselement, auf welches der Sendelichtstrahl über wenigstens eine Umlenkeinheit geführt ist. Der Sendelichtstrahlen ist in einer Ebene geführt. Die Umlenkeinheit weist zwei senkrecht zur Ebene spiegelsymmetrisch angeordnete, ebene Spiegelflächen auf, die in einem festen vorgegebenen Winkel einander gegenüberliegend so angeordnet sind, dass der Sendelichtstrahl an den Spiegelflächen jeweils einmal reflektiert wird. Die Umlenkeinheit ist um eine Drehachse senkrecht zur Ebene des Sendelichtstrahls drehbar.

Der Erfindung liegt die Aufgabe zugrunde, eine optoelektronische Vorrichtung der eingangs genannten Art so auszubilden, dass diese bei hoher Funktionalität eine möglichst geringe Störanfälligkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Objekten in einem Überwachungsbereich und besteht aus einem Sendelichtstrahlen emittierenden Sender, einem Empfangslichtstrahlen empfangenden Empfänger, einer Auswerteeinheit zur Generierung eines Objektfeststellungssignals in Abhängigkeit der Empfangssignale des Empfängers und zwei den Überwachungsbereich begrenzenden Spiegelteilen. Die Sendelichtstrahlen sind durch Reflexionen an diesen Spiegelteilen vom Sender und Empfänger geführt. Wenigstens eines der Spiegelteile weist wenigstens zwei gegeneinander geneigte Spiegelflächen auf, an welchen die Sendelichtstrahlen quer zur Ausbreitungsrichtung abgelenkt werden. Dabei bilden der Sender und Empfänger ein Distanzsensorelement mittels dessen die Laufzeit der Sendelichtstrahlen durch den Überwachungsbereich ermittelt wird. Zur Funktionskontrolle der optoelektronischen Vorrichtung wird die ermittelte Laufzeit der Sendelichtstrahlen durch den Überwachungsbereich mit einem Sollwert verglichen.

Da der Sender und der Empfänger einen Distanzsensor, mittels dessen die Laufzeit der Sendelichtstrahlen kontrolliert wird, wird die Funktionssicherheit der optoelektronischen Vorrichtung erhöht. Damit eignet sich die erfindungsgemäße optoelektronische Vorrichtung auch für sicherheitstechnische Anwendungen.

Ein wesentlicher Vorteil der Erfindung besteht darin, dass durch die Ausbildung wenigstens eines der Spiegelteile mit zueinander geneigten Spiegelflächen durch die bedingte Strahlführung der Sendelichtstrahlen quer zur Ausbreitungsrichtung eine Stabilisierung derart erreicht wird, dass die optoelektronische Vorrichtung unempfindlich gegen seitliche Verkippungen der Spiegelteile ist. Die Spiegelteile der optoelektronischen Vorrichtung brauchen damit nicht exakt quer zur Ausbreitungsrichtung justiert werden, was die Festigung und Montage der optoelektronischen Vorrichtung erheblich erleichtert. Da auch bei seitlichen Verkippungen der Spiegelteile die Funktionsfähigkeit der optoelektronischen Vorrichtung noch vollständig erhalten bleibt, weist diese eine geringe Störanfälligkeit auf.

Zur Objektdetektion erfolgt bevorzugt eine Schwellwertbewertung der Empfangssignale des Empfängers. Das daraus gewonnene Schaltsignal gibt an, ob sich ein Objekt im Überwachungsbereich befindet oder nicht.

Durch die Konfiguration der optoelektronischen Vorrichtung mit zwei längs des Überwachungsbereichs verlaufenden, gegenüberliegenden Spiegelteilen kann die optoelektronische Vorrichtung als Lichtgitter ausgebildet werden.

Weiterhin können die Sensorkomponenten der optoelektronischen Vorrichtung auch eine konzentrische Anordnung bilden, die sich insbesondere zur Detektion von Kleinteilen in Rohren eignet.

Die Erfindung wird im Nachstehenden anhand der Zeichnungen erläutert. Es zeigen:
- Figur 1:: Blockschaltbild eines Ausführungsbeispiels einer optoelektronischen Vorrichtung.
- Figur 2:: Variante der optoelektronischen Vorrichtung gemäß Figur 1.
- Figur 3a:: Ausführungsbeispiele für Spiegelteile für eine optoelektronische Vorrichtung gemäß dem Stand der Technik.
- Figur 4a-c:: Ausführungsbeispiele für Spiegelteile einer optoelektronischen Vorrichtung gemäß Figur 1 oder Figur 2.
- Figur 5:: Ausführungsbeispiel für Spiegelteile mit Dachkantprismenplatten für eine optoelektronische Vorrichtung gemäß Figur 1 oder Figur 2.
- Figur 6:: Ausführungsbeispiel einer optoelektronischen Vorrichtung mit Referenzkanal.
- Figur 7:: Ausführungsbeispiel einer nach dem Reflex- und Autokollimatinsprinzip arbeitenden optoelektronischen Vorrichtung.
- Figur 8:: Prinzipdarstellung der Strahlumkehr bei einer optoelektronischen Vorrichtung durch geneigte Spiegelteile.
- Figur 9a, b:: Diagramme der Ortsabhängigkeit des Strahlverlaufs der Sendelichtstrahlen und der Dämpfung der Sendelichtstrahlen für die optoelektronische Vorrichtung gemäß Figur 8.
- Figur 10a-c:: Variante der optoelektronischen Vorrichtung gemäß Figur 8
a) Längsschnitt der optoelektronischen Vorrichtung.
b) Draufsicht auf die Vorderseiten der Spiegelteile der optoelektronischen Vorrichtung gemäß Figur 10a.
c) Darstellung verschiedener Winkel bei den Spiegelteilen der optoelektronischen Vorrichtung gemäß Figur 10a.
- Figur 11:: Ausführungsbeispiel einer als Sicherheitslichtgitter ausgebildeten optoelektronischen Vorrichtung.
- Figur 12:: Ausführungsform einer optoelektronischen Vorrichtung zur Kleinteiledetektion in einem transparenten Rohr
a) Seitenansicht
b) Draufsicht.
- Figur 13a-d:: Optoelektronische Vorrichtung gemäß den Figuren 12a, b mit einem Gehäuse zur Aufnahme von Sensorkomponenten.
- Figur 14:: Erste Variante der optoelektronischen Vorrichtung gemäß Figuren 12a, b.
- Figur 15:: Zweite Variante der optoelektronischen Vorrichtung gemäß Figuren 12 a, b.

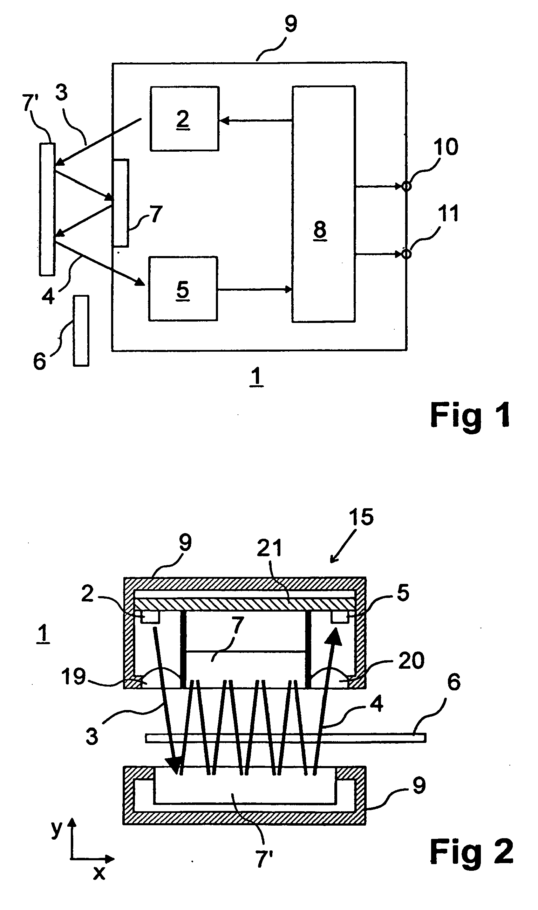

Figur 1 zeigt das Blockschaltbild einer optoelektronischen Vorrichtung 1 mit einem Sender 2, welcher Sendelichtstrahlen 3 in einen zu überwachenden Bereich abstrahlt. Weiterhin umfasst die optoelektronische Vorrichtung 1 einen Empfangslichtstrahlen 4 empfangender Empfänger 5. Der Sender 2 ist von einer Leuchtdiode gebildet. Der Empfänger 5 kann als Photodiode ausgebildet sein. Zur Detektion von Objekten 6 werden die Sendelichtstrahlen 3 zwischen zwei Spiegelteilen 7, 7' geführt und dann als Empfangslichtstrahlen 4 zum Empfänger 5 geführt. Im vorliegenden Fall ist ein sensorseitiges Spiegelteil 7 und ein in Abstand hierzu weiteres Spiegelteil 7' vorgesehen. Durch die Mehrfachreflektion der Sendelichtstrahlen 3 zwischen den beiden Spiegelteilen 7 und 7' wird das Objekt 6 auch bei geringen Abmessungen im Überwachungsbereich sicher detektiert. Ist das Objekt 6 eine transparente Folie, werden die Sendelichtstrahlen 3 stark gedämpft und die Folie so sicher erkannt. Die Objekterfassung erfolgt derart, dass aus den am Empfänger anstehenden Empfangssignalen als Objektfeststellungssignal ein binäres Schaltsignal abgeleitet wird, dessen Schaltzustände angeben, ob sich ein Objekt im Überwachungsbereich befindet oder nicht. Das Schaltsignal wird durch eine Schwellwertbewertung der Empfangssignale am Ausgang des Empfängers 5 gemessen. Die Auswertung erfolgt in einer Auswerteeinheit 8, welche mit den übrigen Komponenten der optoelektronischen Vorrichtung 1 in einem Gehäuse 9 untergebracht ist. Das Schaltsignal wird über einen Schaltausgang 10 ausgegeben, der an die Auswerteeinheit 8 angeschlossen ist. Weiterhin ist eine Parametrierschnittstelle 11 an die Auswerteeinheit 8 angeschlossen.

Figur 2 zeigt eine Variante der optoelektronischen Vorrichtung 1 gemäß Figur 1, die nach dem Lichtschrankenprinzip arbeitet, wobei das Spiegelteil 7 zwischen dem Sender 2 und Empfänger 5 angeordnet ist. Die Spiegelteile 7, 7' sind in gegenüberliegend angeordneten Teilen des Gehäuses 9 gelagert.

In dem den Sender 2 und Empfänger 5 aufnehmenden Teil des Gehäuses 15 sind eine Sendeoptik 19 zur Strahlformung der Sendelichtstrahlen 3 und eine Empfangsoptik 20 zur Fokussierung der Empfangslichtstrahlen 4 auf den Empfänger 5 vorgesehen. Weiterhin ist in diesem Teil des Gehäuses 15 eine Leiterplatte 21 integriert, auf welcher der Sender 2 und Empfänger 5 sowie die nicht gesondert dargestellten Komponenten der Auswerteeinheit 8 angeordnet sind.

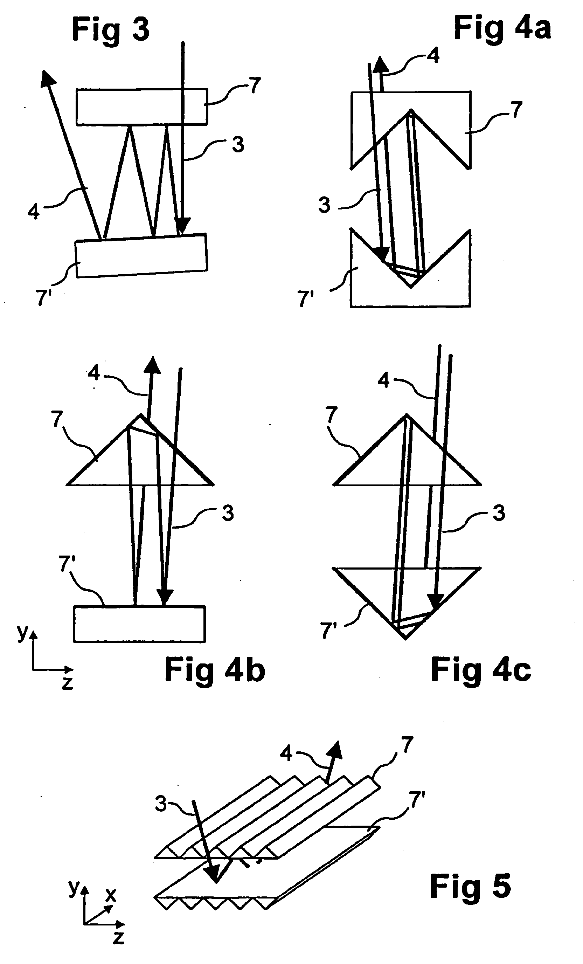

Figur 3 zeigt Spiegelteile 7, 7' nach dem Stand der Technik, die jeweils ebene Spiegelflächen aufweisen, um die Sendelichtstrahlen 3 vom Sender 2 über die Spiegelteile 7, 7' vom Empfänger 5 zu führen. Bereits geringste Abweichungen von der parallelen Strahlführung führen wie in Figur 3 dargestellt, zu einem seitlichen Entweichen der Empfangslichtstrahlen 4, das heißt diese gelangen nicht mehr zum Empfänger.

Dies bedeutet, dass die aus dem Stand der Technik bekannten, mit Spiegelteilen 7, 7' gemäß Figur 3 ausgestatteten optoelektronischen Vorrichtungen 1 sehr empfindlich gegen kleinste Verkippungen dieser Teile sind und damit äußerst störungsanfällig sind.

Figur 4a zeigt ein erstes Ausführungsbeispiel für die erfindungsgemäßen Spiegelteile 7, 7' mit Oberflächenspiegeln, die aus jeweils zwei Spiegeln gebildet werden, die um 90° zueinander geneigt sind. Dadurch wird ein seitliches Entweichen des Empfangslichtstrahles 4 verhindert. Dabei zeigt Figur 4 die Spiegelteile 7, 7' einer optoelektronischen Vorrichtung 1 gemäß Figur 1 oder 2 im Querschnitt.

Figur 4b zeigt eine Querschnittsdarstellung eines zweiten Ausführungsbeispiels der Spiegelteile 7, 7' der optoelektronische Vorrichtung 1 gemäß Figur 1 oder 2, wobei das sensorseitige Spiegelteil 7 durch ein Dachkantprisma gebildet wird, wodurch der Fehlwinkel der einfallenden Sendelichtstrahlen 3 sich durch die weiteren Reflektionen nicht vergrößert. Das Spiegelteil 7' weist eine ebene Spiegelfläche auf, welche von einem Planspiegel gebildet ist.

Figur 4c zeigt ein drittes Ausführungsbeispiel, wobei beide Spiegelteile 7, 7' durch Dachkantprismen gebildet werden.

Figur 5 zeigt ein viertes Ausführungsbeispiel, bei dem die Spiegelteile 7, 7' durch Dachkantprismenplatten gebildet werden. Der Vorteil dabei ist, dass die Spiegelteile 7, 7' sehr flach sein können.

In den Ausführungsbeispielen gemäß Figuren 4, 5 verläuft die Ausbreitungsrichtung der Sendelichtstrahlen 3 in X-Richtung.

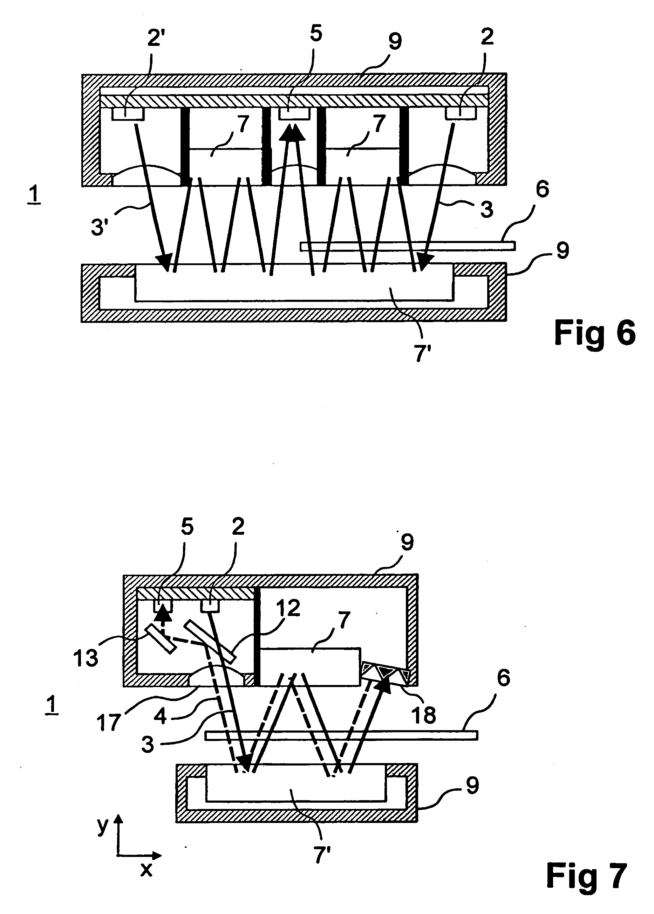

Figur 6 zeigt eine Erweiterung der in Figur 2 dargestellten optoelektronischen Vorrichtung 1 mit einem zusätzlichen Referenzkanal, der nicht durch ein Objekt 6 beeinflusst wird. Der Referenzkanal dient zur Ermittlung der Grunddämpfung der freien Strecke, das heißt der Abschwächung der Sendelichtstrahlen 3 bei Durchgang durch den objektfreien Überwachungsbereich. Der Referenzkanal ist von einem Sender 2'gebildet, der Sendelichtstrahlen 3' emittiert. Die Sendelichtstrahlen 3' des Senders 2' werden auf den selben Empfänger 5 wie die Sendelichtstrahlen 3 des Senders 2 geführt, wobei die Sender 2, 2' hierbei alternierend aktiviert werden, so dass die durch die Sender 2, 2' am Empfänger 5 generierten Signale getrennt ausgewertet werden können. Dadurch können Drifterscheinungen, wie zum Beispiel langsame Verschmutzung oder temperaturbedingte Winkeländerungen kompensiert werden.

Figur 7 zeigt ein Ausführungsbeispiel einer optoelektronischen Vorrichtung 1, die nach dem Reflex- und Autokollimationsprinzip arbeitet. Die vom Sender 2 emittierten Sendelichtstrahlen 3 werden wieder über die Spiegelteile 7, 7' innerhalb des Überwachungsbereichs geführt. Im Unterschied zur Ausführungsform gemäß Figur 2 sind der Sender 2 und der Empfänger 5 nebeneinander auf derselben Seite des Überwachungsbereichs angeordnet. Nachdem die vom Sender 2 emittierten Sendelichtstrahlen 3 ein erstes Mal durch den Überwachungsbereich geführt sind, treffen diese auf einen Tripelreflektor 18. Durch den Tripelreflektor 18 werden die Sendelichtstrahlen 3 als Empfangslichtstrahlen 4 umgelenkt. Die Empfangslichtstrahlen 4 werden wie die Sendelichtstrahlen 3 durch eine gemeinsame Sende-Empfangslinse 17 geführt und durch einen Strahlteiler 12 und einen Umlenkspiegel 13 zum Empfänger 5 gelenkt. Bei dieser Anordnung können Reflexionslichtschranken mit Polarisationsfiltern verwendet werden, so dass nur Empfangslichtstrahlen 4 vom Tripelreflektor 18 berücksichtigt und Direktreflexe von einem Spiegelteil 7, 7' unterdrückt werden.

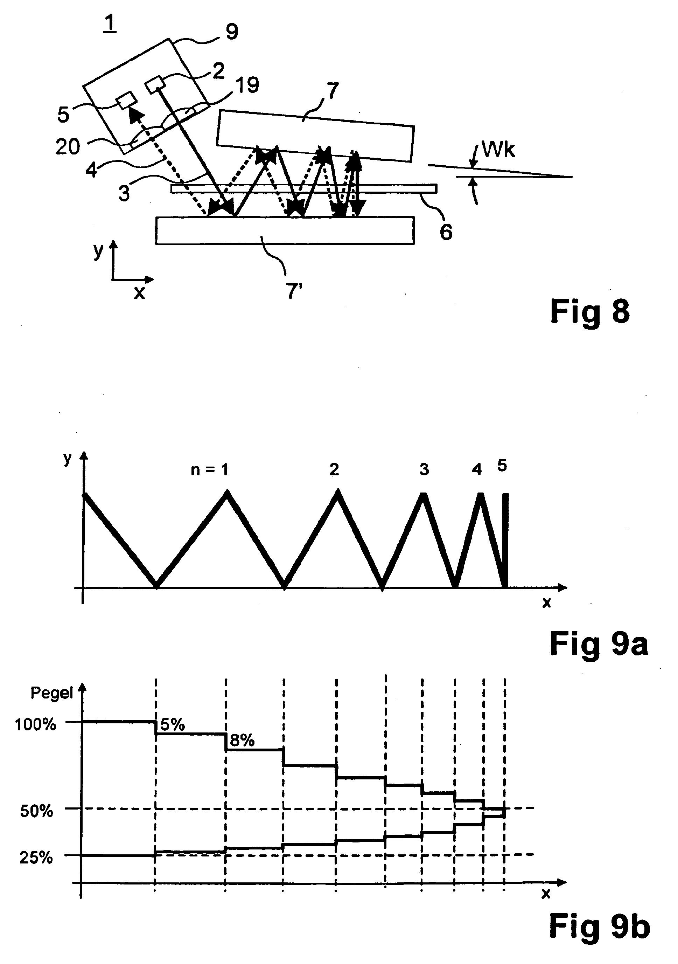

Figur 8 zeigt eine Ausführungsform einer optoelektronischen Vorrichtung 1, bei welcher der Sender 2 und Empfänger 5 in einem gemeinsamen Gehäuse 9 angeordnet sind. Dem Sender 2 ist eine Sendeoptik 19 zugeordnet, dem Empfänger 5 ist eine Empfangsoptik 20 zugeordnet. Bei der Führung der Sendelichtstrahlen 3 beziehungsweise Empfangslichtstrahlen 4 im Überwachungsbereich werden diese wieder zwischen Spiegelteilen 7, 7' mehrfach reflektiert, wobei in diesem Fall die Spiegelteile 7, 7' um einen Winkel WK so geneigt sind, dass eine Strahlumkehr der Sendelichtstrahlen erfolgt.

Da das Spiegelteil 7 gegen das Spiegelteil 7' so geneigt ist, dass der sensorseitige Abstand etwas größer als der dem Sensor abgewandte ist, wird der Einfallswinkel der Sendelichtstrahlen 3 nach jeder Reflektion größer. Wenn 90° überschritten werden, kehren die Sendelichtstrahlen 3 um und erreichen den Sensor als Empfangslichtstrahlen 4 parallel zu den Sendelichtstrahlen 3.

Figur 9a zeigt das Diagramm des Strahlverlaufs für die optoelektronische Vorrichtung 1 gemäß Figur 8. Demgemäß reduziert sich der Einstrahlwinkel We nach jeder Reflektion am Spiegelteil 7 um 2*Wk, wobei Wk der Winkel zwischen den beiden Spiegelteilen 7, 7' ist, die einen spitzen Keil bilden. Die Strahlumkehr erfolgt damit nach n Reflektionen am Spiegelteil 7, wobei n = We / 2Wk ist.

Figur 9b zeigt das Diagramm des Dämpfungsverlaufs der Sendelichtstrahlen 3 der optoelektronischen Vorrichtung 1 gemäß Figur 8 bei freier Strecke. Unter der Annahme, dass das Spiegelteil 7 durch ein Dachkantprisma gebildet wird, beträgt die Dämpfung beim Ein- und Austritt aus dem Dachkantprisma jeweils etwa 4%. Wird das Spiegelteil 7' durch einen Oberflächenplanspiegel gebildet, kann mit etwa 5% Dämpfung gerechnet werden. Damit ergibt sich bei n=5 Reflexionen am Strahlumkehrpunkt eine Dämpfung von ca. 50% und für den Empfangsstrahl 4 eine Dämpfung auf ca. 25% [Pe = (0,95*0,92)^(2*n)]. Eine hochtransparente Folie 6 würde bei n=5 Reflexionen 20 mal vom Lichtstrahl durchstrahlt, d.h. 40 Medienübergänge mit mindestens 4% Dämpfung würden den Empfangspegel bei freier Strecke auf 20% dämpfen. Bisherige Foliensensoren nach dem Reflexionsprinzip erreichen nur eine Dämpfung auf 84%, das heißt bei Berücksichtigung von Toleranzen, Störungen und Verschmutzungen von ca. 10% bleiben nur noch ca. 6% als Funktionsreserve, was zu einer eingeschränkten Detektionssicherheit führt.

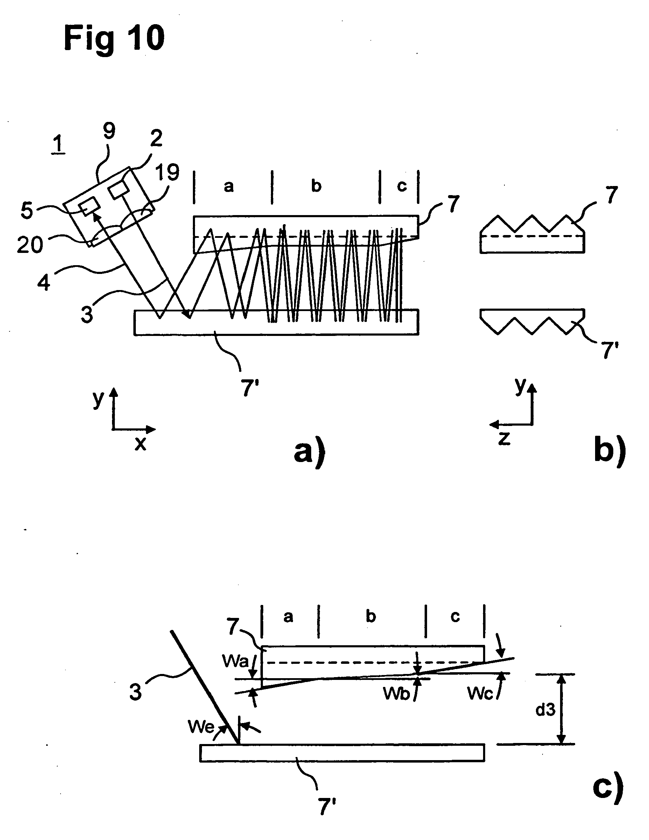

Die Figuren 10 a - c zeigen eine Variante der optoelektronischen Vorrichtung 1 gemäß Figur 8. Die in Figur 10a in einem Längsschnitt dargestellte optoelektronische Vorrichtung 1 unterscheidet sich von der optoelektronischen Vorrichtung 1 gemäß Figur 8 lediglich hinsichtlich der Ausbildung ihrer Spiegelteile 7, 7', die in Figur 10b in einer Draufsicht dargestellt sind. Im Unterschied zur Ausführungsform gemäß Figur 8 sind die Spiegelteile 7, 7' in Ausbreitungsrichtung der Sendelichtstrahlen 3 nicht geneigt, wobei dennoch auch mit den Spiegelteilen 7, 7' der optoelektronischen Vorrichtung 1 gemäß Figur 10a - c eine Strahlumkehr der Sendelichtstrahlen 3 erzielt wird.

Wie aus Figur 10a ersichtlich, wird im vorliegenden Fall eine Strahlumkehr durch prismenartige Verdickungen am Anfang (Bereich a), bzw. Verjüngungen am Ende (Bereich c) des Spiegelteiles 7 erreicht. Der Bereich a sorgt dafür, dass der Einfallswinkel der Sendelichtstrahlen 3 verringert wird, so dass die Sendelichtstrahlen 3 im Bereich b so dicht liegen, dass Kleinteile sicher erkannt, beziehungsweise Klarsichtfolien eine ausreichende Gesamtdämpfung bewirken. Der Bereich c sorgt dafür, dass für die Sendelichtstrahlen 3 auch bei Toleranzen bezüglich der Ausrichtung der Spiegelteile 7, 7' zueinander eine Strahlumkehr erfolgt, das heißt dass die Sendelichtstrahlen 3 in diesem Bereich umkehren und dann als Empfangslichtstrahlen 4 zurück zum Empfänger 5 laufen.

Figur 10b zeigt die Spiegelteile 7, 7' von vorne, wobei das Spiegelteil 7' auch durch einen Planspiegel gebildet werden kann. Wie aus dieser Darstellung ersichtlich, weisen beide Spiegelteile 7, 7' quer zur Ausbreitungsrichtung der Sendelichtstrahlen 3 eine Prismenstruktur auf.

Figur 10c zeigt die für den Strahlverlauf der Sendelichtstrahlen 3 wichtigen Winkel. Dabei bedeutet:
- We:: Einfallswinkel der Sendelichtstrahlen 3 auf dem Spiegelteil 7'.
- Wa:: Keilwinkel der prismenartigen Verdickung des Spiegelteils 7 im Bereich a.
- Wb:: Keilwinkel des Spiegelteils 7 im Bereich b, der in der Regel 0 sein wird.
- Wc:: Keilwinkel der prismenartigen Verjüngung des Spiegelteils 7 im Bereich c, durch den die Strahlumkehr sichergestellt wird.

Durch die Wahl dieser Winkel, den Abstand d3 zwischen den Spiegelteilen 7, 7' und die Länge der Bereiche a und c wird der Strahlverlauf der Sendelichtstrahlen 3 und Empfangslichtstrahlen 5 definiert.

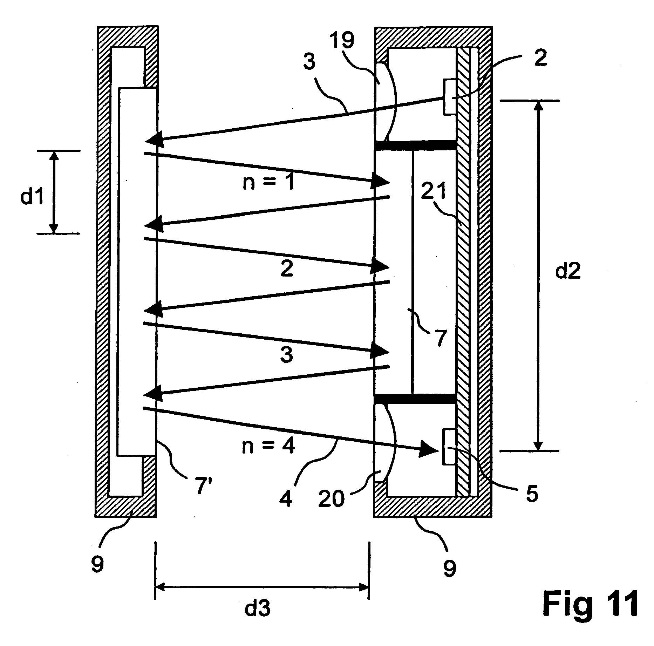

Figur 11 zeigt eine Ausführungsform einer optoelektronischen Vorrichtung 1, die hinsichtlich ihres Aufbaus der der optoelektronischen Vorrichtung 1 gemäß Figur 2 entspricht. Die optoelektronische Vorrichtung 1 gemäß Figur 11 unterscheidet sich hinsichtlich der optoelektronischen Vorrichtung 1 gemäß Figur 2 lediglich hinsichtlich ihrer Funktionsweise. Die optoelektronische Vorrichtung 1 gemäß Figur 11 bildet ein Sicherheitslichtgitter. Der Sender 2 und der Empfänger 5 bilden einen Distanzsensor, der nach dem Lichtlaufzeitprinzip arbeitet. Mit diesem Distanzsensor erfolgt eine Überwachung der Gesamtstrahlung der Sendelichtstrahlen 3 über die Spiegelteile 7, 7' zum Empfänger 5, wobei die Sendelichtstrahlen 3 wiederum mehrfach zwischen den Spiegelteilen 7, 7' reflektiert werden. Der Gesamtstrahlweg beträgt d4 = d3*n*2, wobei d3 der Abstand der Spiegelteile 7, 7' und n die Anzahl der Reflektionen der Sendelichtstrahlen 3 am Spiegelteil 7 bedeutet. Die Auflösung d1 = d2 / n bestimmt den Einsatz der optoelektronischen Vorrichtung 1 als Sicherheitslichtgitter z.B. als Hand- oder Fingerschutz. Dabei bedeutet d2 der Abstand zwischen dem Sender 2 und dem Empfänger 5. Der Abstand d1 ist, wie aus Figur 11 ersichtlich, von der Differenz der Auftrefforte der Sendelichtstrahlen 3 auf dem Spiegelteil 7' bei den ersten beiden Reflexionen der Sendelichtstrahlen 3 an diesem Spiegelteil 7' gebildet. Die Manipulationssicherheit des Sicherheitslichtgitters wird durch die Distanzmessung gewährleistet. Bei einem Abstand d3 = 1,5 m würde eine Änderung der Anzahl n der Reflektionen, eine Distanzänderung von mindestens 3 m bedeuten, die sicher messbar ist.

Die Spiegelteile 7, 7' der optoelektronischen Vorrichtung 1 gemäß Figur 11 weisen analog zur Ausführungsform gemäß Figur 2 zueinander geneigte Spiegelflächen entsprechend den Ausführungsformen gemäß Figur 4 auf. Würden die Spiegelteile 7, 7' jeweils Planspiegel als Spiegelflächen aufweisen, müssten bei dem obigen Beispiel die Spiegel zueinander auf +/- 0,02° genau ausgerichtet werden, was in der Applikation nicht praktikabel wäre.

Berechnungsbeispiel für die Auflösung des Sicherheitslichtgitters gemäß Figur 11:

| | |
|---|---|
| | Auflösung d1 = d2 / n |
| | Gesamtstrahlweg d4 = d3 * n * 2. |
| Zahlenwerte: | d2: 0,8 m, |
| | d3: 1,5 m |
| | n: 4 |
| | d1 = 0,2 m |
| | d4 = 12 m, 9m (n=3), 15 m (n=5) |

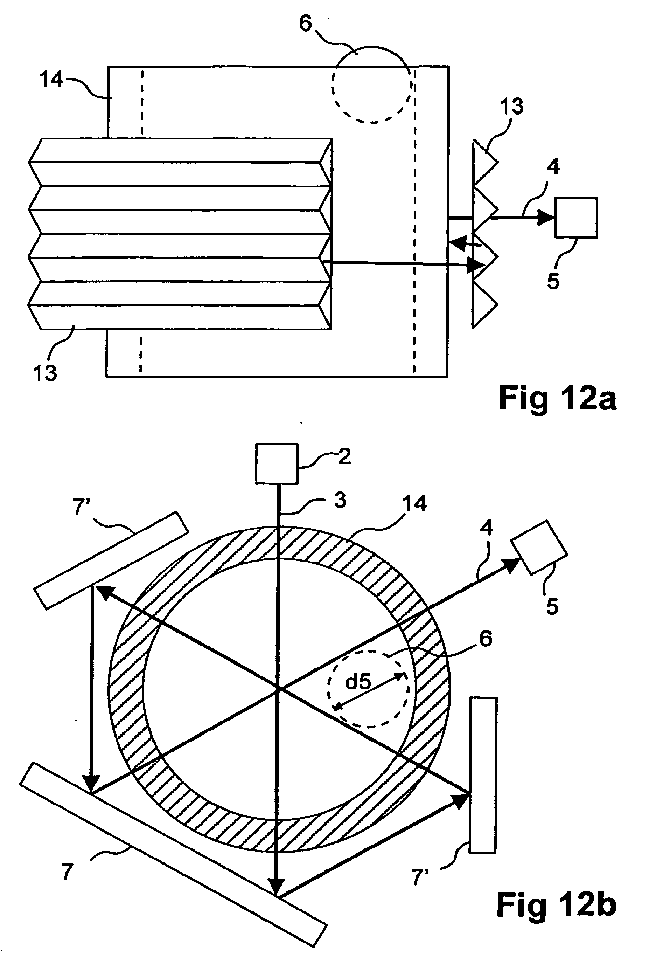

Die Figuren 12a, b zeigen eine Ausführungsform einer optoelektronischen Vorrichtung 1, die zur Detektion von als Kleinteile ausgebildeten Objekten in einem transparenten Rohr 14 dient. Das hohlzylindrische Rohr 14 besteht beispielsweise aus Plexiglas.

Die optoelektronische Vorrichtung 1 umfasst einen Sendelichtstrahlen 3 emittierenden Sender 2 sowie einen Empfangslichtstrahlen 4 empfangenden Empfänger 5. Weiterhin sind ein größeres Spiegelteil 7 sowie zwei kleinere Spiegelteile 7' vorgesehen. Diese sind in Umfangsrichtung des Rohres 14 außerhalb des Rohres 14 angeordnet, so dass die vom Sender 2 emittierten Sendelichtstrahlen 3 zunächst auf das Spiegelteil 7 treffen, von dort auf die Spiegelteile 7' geführt sind und dann als Empfangslichtstrahlen 4 auf den Empfänger 5 auftreffen. Dabei durchsetzen die Sendelichtstrahlen 3 das Rohr 14 mehrmals in einer horizontalen Ebene. Die Spiegelteile 7, 7' weisen analog zur Ausführungsform gemäß Figur 5 die Form von Dachkantprismenplatten auf Durch diese Prismenstrukturen wird wiederum ein seitliches Entweichen der Sendelichtstrahlen 3 verhindert. Damit ist die optoelektronische Vorrichtung 1 unempfindlich gegen ein Verkippen der Spiegelteile 7, 7'.

Wie aus Figur 12a ersichtlich, verlaufen die Sendelichtstrahlen 3 in radialer Richtung durch das transparente Rohr 14, damit Defokussierungen durch die gekrümmte Wandung des Rohres 14 vermieden werden.

Wie aus Figur 12b ersichtlich ist die Minimalgröße d5 des Objektes 6 durch die Anzahl der Spiegelteile 7, 7' bestimmt, die bei Bedarf erhöht werden kann.

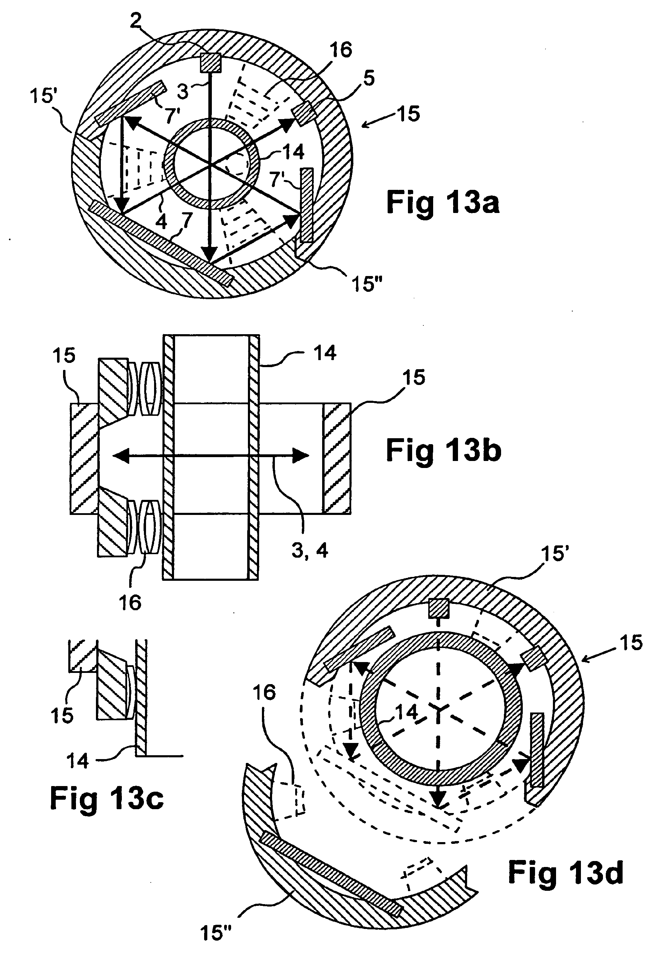

Die Figuren 13a - d zeigen eine Weiterbildung der optoelektronischen Vorrichtung 1 gemäß den Figuren 12a, b. Die Sensorkomponenten der optoelektronischen Vorrichtung 1, die der Ausführungsform gemäß Figuren 12a, b entsprechen, sind in einem Gehäuse 15 integriert. Das Gehäuse 15 ist hohlzylindrisch ausgebildet. Der Durchmesser des Gehäuses 15 ist so dimensioniert, dass in dessen Innenraum das Rohr 14 platziert werden kann, wobei zudem an der Innenwand des Gehäuses 15 die Sensorkomponenten gelagert sind.

Wie aus Figur 13a ersichtlich, ist das Gehäuse 15 in zwei Gehäusesegmente 15', 15" unterteilt, um das Rohr 14 zu Montagezwecken in dieses einführen zu können. Die Abstandshalter 16 stellen sicher, dass das Rohr 14 in der Mitte des Gehäuses 15 gehalten wird.

Figur 13b zeigt die Abstandshalter 16, die aus einzelnen Federelementen gebildet werden, um gleichmäßig anzudrücken und Maßtoleranzen auszugleichen.

Figur 13c zeigt den Abstandshalter 16, beim Einsatz an einem Rohr 14 mit größerem Durchmesser. Dazu werden vom Abstandshalter 16 so viele Federelemente ausgebrochen, bis das Rohr 14 gerade wieder ausreichend angedrückt wird.

Figur 13d zeigt die Mehrstrahlanordnung nach Figur 13a mit dem Rohrdurchmesser aus Figur 13c. Die Gehäusehälfte 15" ist dabei abgenommen um zu zeigen, wie das Rohr 14 eingefügt werden kann.

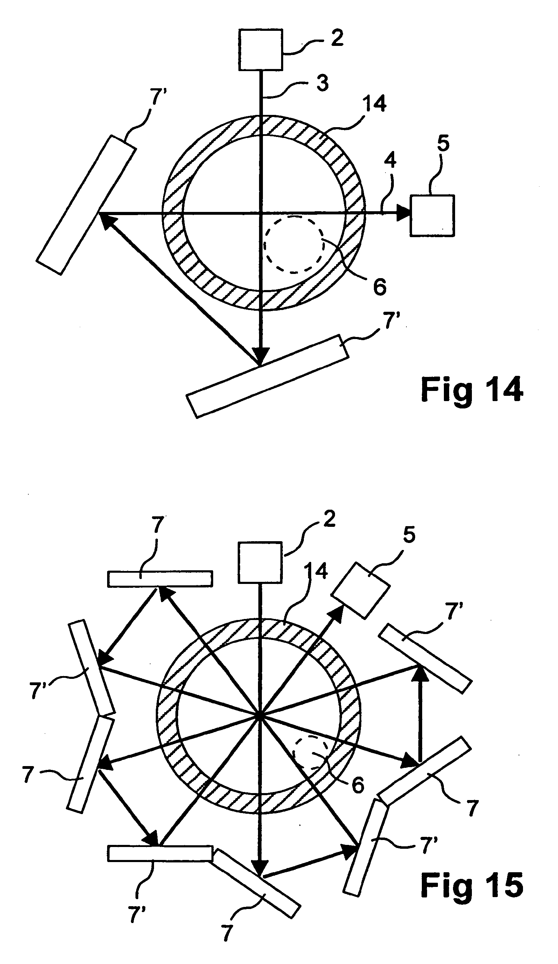

Figur 14 zeigt eine Variante gemäß Figur 12. Im Unterschied zur optoelektronischen Vorrichtung 1 gemäß Figur 12, weist die optoelektronische Vorrichtung 1 gemäß Figur 14 nur zwei Spiegelteile 7' auf, das heißt, es ist kein Spiegelteil 7 vorgesehen. Ansonsten entspricht die optoelektronische Vorrichtung gemäß Figur 14 der Ausführungsform gemäß Figur 12. Durch die reduzierte Anzahl der Spiegelteile 7' werden die Sendelichtstrahlen 3 nur zwei Mal durch das Rohr 14 geführt.

Figur 15 zeigt eine weitere Variante der optoelektronischen Vorrichtung 1 gemäß Figur 12. Bei dieser optoelektronischen Vorrichtung 1 sind neben einem Sender 2 und einem Empfänger 5 vier Paare von Spiegelteilen 7, 7' vorgesehen, die jeweils identisch ausgebildet sind. Diese Sensorkomponenten sind wiederum in Umfangsrichtung um das Rohr 14 angeordnet. Die Sendelichtstrahlen 3 sind dabei jeweils von einem Spiegelteil 7 zu einem Spiegelteil 7' geführt. Die von dort reflektierten Sendelichtstrahlen 3 durchsetzen das Rohr 14 und treffen dann auf das nächste Spiegelteil 7. Bei dieser Anordnung werden die Sendelichtstrahlen 3 fünfmal durch das Rohr 14 geführt.

Auch bei den Ausführungsformen gemäß den Figuren 14 und 15 ist darauf geachtet, dass die Sendelichtstrahlen 3 immer radial durch das Rohr 14 geführt werden um die Lichtbrechung durch die gekrümmte Wand des Rohres 14 gering zu halten.

## Patentansprüche

1. Optoelektronische Vorrichtung zur Erfassung von Objekten in einem Überwachungsbereich, mit einem Sendelichtstrahlen (3) emittierenden Sender (2), einem Empfangslichtstrahlen (4) empfangenden Empfänger (5), einer Auswerteeinheit (8) zur Generierung eines Objektfeststellungssignals in Abhängigkeit der Empfangssignale des Empfängers (5), und mit zwei den Überwachungsbereich begrenzenden Spiegelteilen (7, 7'), wobei die Sendelichtstrahlen (3) durch Reflexionen an diesen Spiegelteilen (7, 7') vom Sender (2) zum Empfänger (5) geführt sind, und wobei wenigstens eines der Spiegelteile (7) wenigstens zwei gegeneinander geneigte Spiegelflächen aufweist, an welchen die Sendelichtstrahlen (3) quer zur Ausbreitungsrichtung abgelenkt werden, **dadurch gekennzeichnet, dass** der Sender (2) und Empfänger (5) ein Distanzsensorelement bilden, mittels dessen die Laufzeit der Sendelichtstrahlen (3) durch den Überwachungsbereich ermittelt wird, wobei zur Funktionskontrolle der optoelektronischen Vorrichtung die ermittelte Laufzeit der Sendelichtstrahlen (3) durch den Überwachungsbereich mit einem Sollwert verglichen wird.

2. Optoelektronische Vorrichtung nach Anspruch 1, **dadurch gekennzeichnet, dass** die bei einem Objekteingriff in den Überwachungsbereich erfolgte Dämpfung der Sendelichtstrahlen (3) zur Generierung einer Objektmeldung registriert wird.

3. Optoelektronische Vorrichtung nach Anspruch 2, **dadurch gekennzeichnet, dass** das Objektfeststellungssignal als binäres Schaltsignal ausgebildet ist, welches durch eine Schwellwertbewertung der Empfangssignale gewonnen wird.

4. Optoelektronische Vorrichtung nach einem der Ansprüche 1 bis 3, **dadurch gekennzeichnet, dass** beide Spiegelteile (7, 7') zueinander geneigte Spiegelflächen aufweisen.

5. Optoelektronische Vorrichtung nach einem der Ansprüche 1 bis 4, **dadurch gekennzeichnet, dass** eines der Spiegelteile (7, 7') nur eine ebene Spiegelfläche aufweist.

6. Optoelektronische Vorrichtung nach einem der Ansprüche 1 bis 5, **dadurch gekennzeichnet, dass** die zueinander geneigten Spiegelflächen des oder der Spiegelteile (7, 7') von in einem Winkel von 90° zueinander geneigten Planspiegeln gebildet sind.

7. Optoelektronische Vorrichtung nach einem der Ansprüche 1 bis 5, **dadurch gekennzeichnet, dass** die zueinander geneigten Spiegelflächen des oder der Spiegelteile (7, 7') Bestandteil eines Dachkantprismas sind.

8. Optoelektronische Vorrichtung nach Anspruch 7, **dadurch gekennzeichnet, dass** das Dachkantprisma um 90° gegeneinander geneigte Spiegelflächen aufweist.

9. Optoelektronische Vorrichtung nach einem der Ansprüche 7 oder 8, **dadurch gekennzeichnet, dass** das oder die Spiegelteile (7, 7') in Form von Dachkantprismenplatten ausgebildet sind.

10. Optoelektronische Vorrichtung nach einem der Ansprüche 1 bis 9, **dadurch gekennzeichnet, dass** die Spiegelteile 7, 7' in Abstand gegenüberliegend angeordnet sind und jeweils einen Rand des Überwachungsbereichs begrenzen, und dass die Sendelichtstrahlen (3) bei Durchgang durch den Überwachungsbereich mehrfach an den Spiegelteilen (7, 7') reflektiert werden.

11. Optoelektronische Vorrichtung nach Anspruch 12, **dadurch gekennzeichnet, dass** diese nach dem Lichtschrankenprinzip arbeitet

12. Optoelektronische Vorrichtung nach einem der Ansprüche 1 bis 11, **dadurch gekennzeichnet, dass** diese nach dem Reflex- und Autokollimationsprinzip arbeitet.

13. Optoelektronische Vorrichtung nach Anspruch 12, **dadurch gekennzeichnet, dass** der Sender (2) und der Empfänger (5) nebeneinanderliegend einem ersten Ende des Überwachungsbereichs angeordnet sind, und dass nach einem ersten Durchlaufen des Überwachungsbereichs eine Strahlumkehr der Sendelichtstrahlen (3) erfolgt, so dass diese ein zweites Mal den Überwachungsbereich durchlaufen.

14. Optoelektronische Vorrichtung nach Anspruch 13, **dadurch gekennzeichnet, dass** zur Strahlumkehr der Sendelichtstrahlen (3) ein Tripelreflektor (18) vorgesehen ist.

15. Optoelektronische Vorrichtung nach Anspruch 13, **dadurch gekennzeichnet, dass** die Strahlumkehr mittels der Spiegelteile (7, 7') erfolgt.

16. Optoelektronische Vorrichtung nach einem der Ansprüche 10 bis 15, **dadurch gekennzeichnet, dass** diese ein Sicherheitsgitter bildet.

17. Optoelektronische Vorrichtung nach einem der Ansprüche 1 bis 9, **dadurch gekennzeichnet, dass** die Spiegelteile (7, 7') mit dem Sender (2) und dem Empfänger (5) eine den Überwachungsbereich umschließende konzentrische Anordnung bilden.

18. Optoelektronische Vorrichtung nach Anspruch 17, **dadurch gekennzeichnet, dass** mittels dieser Objekte (6) in einem transparenten Rohr (14) erfasst werden.

## Claims

1. Optoelectrical device for detecting objects in a monitoring region, comprising a transmitter (2) emitting transmitted light beams (3), a receiver (5) receiving received light beams (4), an evaluating unit (8) for generating an object detection signal in dependence on the received signals of the receiver (5) and two mirror parts (7, 7') bounding the monitoring region, wherein the transmitted light beams (3) are guided by reflection at these mirror parts (7, 7') from the transmitter (2) to the receiver (5), and wherein at least one of the mirror parts (7) has at least two mirror surfaces inclined relative to one another, at which the transmitted light beams (3) are deflected transversely to the direction of propagation, **characterised in that** the transmitter (2) and receiver (5) form a distance sensor element, by means of which the transit time of the transmitted light beams (3) through the monitoring region is determined, wherein for function control of the optoelectronic device the determined transit time of the transmitted light beams (3) through the monitoring region is compared with a target value.

2. Optoelectronic device according to claim 1, **characterised in that** the attenuation, which is effected in the case of object intervention in the monitoring region, of the transmitted light beams (3) is registered for generation of an object report.

3. Optoelectronic device according to claim 2, **characterised in that** the object detection signal is formed as a binary switching signal which is obtained by threshold value evaluation of the received signals.

4. Optoelectronic device according to any one of claims 1 to 3, **characterised in that** the two mirror parts (7, 7') have mirror surfaces inclined relative to one another.

5. Optoelectronic device according to any one of claims 1 to 4, **characterised in that** one of the mirror parts (7, 7') has only a planar mirror surface.

6. Optoelectronic device according to any one of claims 1 to 5, **characterised in that** the mutually inclined mirror surfaces of the mirror part or mirror parts (7, 7') are formed by planar mirrors inclined relative to one another at an angle of 90°.

7. Optoelectronic device according to any one of claims 1 to 5, **characterised in that** the mutually inclined mirror surfaces of the mirror part or mirror parts (7, 7') are a component of a roof prism.

8. Optoelectronic device according to claims 7, **characterised in that** the roof prism has mirror surfaces inclined relative to one another by 90°.

9. Optoelectronic device according to one of claims 7 and 8, **characterised in that** the mirror part or mirror parts (7, 7') are constructed in the form of roof prism plates.

10. Optoelectronic device according to any one of claims 1 to 9, **characterised in that** the mirror parts (7, 7') are arranged at a spacing opposite one another and each delimit a respective edge of the monitoring region and that the transmitted light beams (3) on passage through the monitoring region are multiply reflected at the mirror parts (7, 7').

11. Optoelectronic device according to claim 12, **characterised in that** this operates according to the light barrier principle.

12. Optoelectronic device according to any one of claims 1 to 11, **characterised in that** this operates according to the reflection and autocollimation principle.

13. Optoelectronic device according to claim 12, **characterised in that** the transmitter (2) and the receiver (5) are arranged adjacent to one another at a first end of the monitoring region and that after a first transit of the monitoring region a beam reversal of the transmitted light beams (3) is carried out so that these run through the monitoring region a second time.

14. Optoelectronic device according to claim 13, **characterised in that** a triple reflector (18) is provided for beam reversal of the transmitted light beams (3).

15. Optoelectronic device according to claim 13, **characterised in that** the beam reversal is carried out by means of the mirror parts (7, 7').

16. Optoelectronic device according to any one of claims 10 to 15, **characterised in that** this forms a security grating.

17. Optoelectronic device according to any one of claims 1 to 9, **characterised in that** the mirror parts (7, 7') form together with the transmitter (2) and the receiver (5) a concentric arrangement surrounding the monitoring region.

18. Optoelectronic device according to claim 17, **characterised in that** objects (6) in a transparent tube (14) are detected by means of this.

## Revendications

1. Dispositif optoélectronique pour détecter des objets dans une zone de surveillance, avec un émetteur (2) émettant des rayons lumineux d'émission (3), un récepteur (5) recevant des rayons lumineux de réception (4), une unité d'évaluation (8) pour générer un signal de détection d'objet en fonction des signaux de réception du récepteur (5), et avec deux parties réfléchissantes (7, 7') qui limitent la zone de surveillance, les rayons lumineux d'émission (3) étant guidés de l'émetteur (2) vers le récepteur (5) par des réflexions sur ces parties réfléchissantes (7, 7'), et au moins une des parties réfléchissantes (7) présentant au moins deux surfaces réfléchissantes inclinées l'une par rapport à l'autre, sur lesquelles les rayons lumineux d'émission (3) sont déviés transversalement à la direction de propagation, **caractérisé en ce que** l'émetteur (2) et le récepteur (5) forment un élément de capteur de distance au moyen duquel le temps de parcours des rayons lumineux d'émission (3) à travers la zone de surveillance est déterminé, le temps de parcours déterminé des rayons lumineux d'émission (3) à travers la zone de surveillance étant comparé avec une valeur de consigne pour contrôler le fonctionnement du dispositif optoélectronique.

2. Dispositif optoélectronique selon la revendication 1, **caractérisé en ce que** l'atténuation des rayons lumineux d'émission (3) se produisant lors d'une entrée d'un objet dans la zone de surveillance est enregistrée pour générer une signalisation d'objet.

3. Dispositif optoélectronique selon la revendication 2, **caractérisé en ce que** le signal de détection d'objet est conçu comme un signal de commutation binaire qui est obtenu par une évaluation de valeur seuil des signaux de réception.

4. Dispositif optoélectronique selon une des revendications 1 à 3, **caractérisé en ce que** les deux parties réfléchissantes (7, 7') présentent des surfaces réfléchissantes inclinées l'une vers l'autre.

5. Dispositif optoélectronique selon une des revendications 1 à 4, **caractérisé en ce qu'**une des parties réfléchissantes (7, 7') présente seulement une surface réfléchissante plane.

6. Dispositif optoélectronique selon une des revendications 1 à 5, **caractérisé en ce que** les surfaces réfléchissantes inclinées l'une vers l'autre de la ou des parties réfléchissantes (7, 7') sont formées de miroirs plans inclinés l'un vers l'autre à un angle de 90°.

7. Dispositif optoélectronique selon une des revendications 1 à 5, **caractérisé en ce que** les surfaces réfléchissantes inclinées l'une vers l'autre de la ou des parties réfléchissantes (7, 7') font partie d'un prisme triangulaire.

8. Dispositif optoélectronique selon la revendication 7, **caractérisé en ce que** le prisme triangulaire présente des surfaces réfléchissantes inclinées l'une par rapport à l'autre de 90°.

9. Dispositif optoélectronique selon une des revendications 7 ou 8, **caractérisé en ce que** la ou les parties réfléchissantes (7, 7') sont réalisées sous la forme de plaquettes de prisme triangulaire.

10. Dispositif optoélectronique selon une des revendications 1 à 9, **caractérisé en ce que** les parties réfléchissantes (7, 7') sont disposées à distance l'une en face de l'autre et limitent chacune un bord de la zone de surveillance, et que les rayons lumineux d'émission (3) sont réfléchis plusieurs fois sur les parties réfléchissantes (7, 7') lors de leur passage à travers la zone de surveillance.

11. Dispositif optoélectronique selon la revendication 12, **caractérisé en ce que** celui-ci fonctionne selon le principe du barrage photoélectrique.

12. Dispositif optoélectronique selon une des revendications 1 à 11, **caractérisé en ce que** celui-ci fonctionne selon le principe de la réflexion et de l'autocollimation.

13. Dispositif optoélectronique selon la revendication 12, **caractérisé en ce que** l'émetteur (2) et le récepteur (5) sont disposés côte à côte à une première extrémité de la zone de surveillance, et qu'après un premier passage à travers la zone de surveillance, il se produit une inversion de faisceau des rayons lumineux d'émission (3), de sorte que ceux-ci traversent une deuxième fois la zone de surveillance.

14. Dispositif optoélectronique selon la revendication 13, **caractérisé en ce qu'**un réflecteur triple (18) est prévu pour l'inversion de faisceau des rayons lumineux d'émission (3).

15. Dispositif optoélectronique selon la revendication 13, **caractérisé en ce que** l'inversion de faisceau est réalisée au moyen des parties réfléchissantes (7, 7').

16. Dispositif optoélectronique selon une des revendications 10 à 15, **caractérisé en ce que** celui-ci forme une barrière de sécurité.

17. Dispositif optoélectronique selon une des revendications 1 à 9, **caractérisé en ce que** les parties réfléchissantes (7, 7') forment avec l'émetteur (2) et le récepteur (5) un agencement concentrique qui entoure la zone de surveillance.

18. Dispositif optoélectronique selon la revendication 17, **caractérisé en ce qu'**il permet de détecter des objets (6) dans un tube transparent (14).
